# EUROPÄISCHE PATENTANMELDUNG

(11) **EP 4 714 269 A1**
(43) Veröffentlichungstag der Anmeldung: **25.03.2026**
(21) Anmeldenummer: 24201598.0
(22) Anmeldetag: 20.09.2024
(51) Int. Cl.: A23L 7/196

(54) **VERFAHREN ZUR HERSTELLUNG VON REISFORMTEILEN SOWIE REISFORMTEIL**

(71) Anmelder: Schade, Matthias, 99867 Gotha-Boilstädt (DE)
(72) Erfinder: Schade, Matthias, 99867 Gotha-Boilstädt (DE)
(74) Vertreter: Dr. Völger, Wolfgang

(57) **Zusammenfassung**

Die Erfindung betrifft ein Verfahren zur Herstellung von Reisformteilen sowie die Reisformteile selbst. Das Verfahren zeichnet sich dadurch aus, dass gekochter Reis mit einem stärkebasierten Klebegemisch vermischt wird und die Stärke durch eine Wärmebehandlung verkleistert wird. Dadurch wird ein formstabiles Reisprodukt erhalten.

## Beschreibung

Die Erfindung betrifft ein Verfahren zur Herstellung eines Reisformteils sowie die Reisformteile selbst. Das Verfahren zeichnet sich dadurch aus, dass gekochter Reis mit einem stärkebasierten Klebegemisch vermischt wird und die Stärke durch eine Wärmebehandlung verkleistert wird. Dadurch wird ein formstabiles Reisprodukt erhalten.

Ein Reisformteil ist eine aus Reiskörnern hergestellte Speise, die als Hauptspeise, Beilage oder Suppeneinlage gegessen wird. Das Problem bei der Herstellung von Reisformteilen ist die mangelnde Formstabilität des Produkts, da Reis, anders als z.B. Kartoffel über nicht ausreichend Stärke verfügt, die die Körner zusammenkleben könnte. Reis tendiert dazu nur schwer, wenn überhaupt, ein Formteil zu ergeben und, wenn man ein Formteil erreicht hat, als solches zusammenzubleiben und nicht wieder in die einzelnen Körner zu zerfallen.

So sind z.B. Mochi-Reisbällchen bekannt, die aber aus Reisteig, d.h. Reismehl, hergestellt werden und bei denen das Reiskorn als Bestandteil nicht im Teig vorhanden ist.

Die als sizilianische Spezialität bekannten "Arancini di riso" basieren dagegen auf Reiskörnern. Sie sind frittierte Reiskroketten, die mit einem Fleischragout gefüllt sind. Hier werden die Reiskörner direkt nach dem Kochen mit Käse (Caciocavallo) zusammengemischt, wobei der Käse die Reiskörner zusammenklebt bevor sie als Kugeln geformt werden und die Füllung inseriert wird.

Wie erwähnt, besteht das Problem, dass bekannte Reisformteile wenig formstabil sind und sich nur schwer dazu eignen, wieder erhitzt zu werden, ohne zu zerfallen und den Geschmack negativ zu verändern.

Aufgabe der Erfindung ist es nun, die Probleme des Stands der Technik zu beseitigen oder zumindest zu reduzieren. Insbesondere soll ein Reisformteil bereitgestellt werden, welches vorgegart und ohne Qualitätseinbußen bei Erhaltung seiner Form erhitzt werden kann.

Diese Aufgabe wird durch ein Verfahren mit den Merkmalen der Patentanspruchs 1 und ein Reisformteil gemäß Patentanspruch 11 bzw. 12 gelöst.

Die Erfindung betrifft somit ein Verfahren, um Reisformteile herzustellen, aufweisend die folgenden Schritte:
(a) Kochen von Reis
(b) Herstellen eines stärkebasierten Klebegemischs enthaltend Wasser, ein Säuerungsmittel, eine Pflanzenstärke, ggf. ein Konservierungsmittel und ggf. ein Verdickungsmittel,
(c) Vermischen des gekochten Reis mit dem Klebegemisch unter Erhalt eines homogenen Teigs,
(d) Formen von Formteilen aus dem in Schritt (c) erhaltenden Teig und ggf. panieren,
(e) Erhitzen des in Schritt (d) erhaltenen Formteils bis sich eine Kerntemperatur von mindestens 80°C eingestellt hat,
(f) Abkühlen des Formteils auf Raumtemperatur und nachfolgende Verpackung.

Im Rahmen der Erfindung soll unter "ein/eine/einer" immer "mindestens ein/eine/einer" verstanden werden. Es können somit auch mehrere Vertreter, wie 2, 3, 4, usw. davon vorhanden sein.

Die vorliegende Erfindung betrifft auch ein Reisformteil, das gemäß dem vorstehenden Verfahren herstellbar ist.

Des Weiteren betrifft die Erfindung ein Reisformteil, dass neben gekochtem Reis auch eine Pflanzenstärke aufweist.

Die Erfindung basiert auf der Eigenschaft von Stärke, die unter Hitzeeinwirkung ein Vielfaches ihres Eigengewichtes an Wasser physikalisch binden, aufquellen und verkleistern kann. Beim Erhitzen mit Wasser quillt die Stärke bei 47-57 °C, die Schichten platzen, und bei 55-87 °C (Kartoffelstärke bei 62,5 °C, Weizenstärke bei 67,5 °C) entsteht Stärkekleister, welcher je nach der Stärkesorte ein verschiedenes Steifungsvermögen besitzt. Dabei hat Maisstärkekleister ein größeres Steifungsvermögen als Weizenstärkekleister und dieser wiederum ein größeres als Kartoffelstärkekleister. Beim Abkühlen bildet sich dieser Effekt langsam wieder zurück und das Wasser wird wieder abgegeben - man spricht von Retrogradation. So ist es möglich, dass die Reiskörner stabil zusammenhalten und ein formstabiles Produkt ergeben.

Erfindungsgemäß wird zuerst Reis mit Flüssigkeit, z.B. Wasser, Milch, Kokosmilch oder Gemischen davon, gegart. Hier ist es bevorzugt, einen Reiskocher zu verwenden und die üblicherweise empfohlene Flüssigkeitsmenge (1 kg Reis/1400 ml Flüssigkeit) zu reduzieren, bevorzugt um 10-40%, mehr bevorzugt um 20-35%, ganz bevorzugt um ca. 30%. Des Weiteren sollte der Reis bevorzugt nicht völlig gargekocht werden, sondern noch eine gewisse Bissfestigkeit behalten. Es ist allerdings mit keinem Nachteil verbunden, wenn der Reis gargekocht ist. Als Reis eignen sich alle bekannten Sorten, wie Langkornreis (z.B. Parboiled Reis, Basmatireis, Jasminreis, Naturreis), Rundkornreis (z.B. Sushireis, Milchreis, Risottoreis [Arborio-, Vialone-, Bomba-, Carnarolireis) oder Wildreis (welcher botanisch keine Reissorte, sondern eine Süßgrasart ist).

Das Klebegemisch des Schritts (b) wird aus Wasser, einem Säuerungsmittel und einer Pflanzenstärke hergestellt. Als Säuerungsmittel eignen sich z.B. Zitronensäure, Ascorbinsäure, Weinsäure, Bernsteinsäure, Äpfelsäure. Bevorzugt ist granulierte Zitronensäure. Als Pflanzenstärke können z.B. Kartoffelmehl, Maismehl oder Weizenmehl eingesetzt werden. Bevorzugt ist Maismehl. In einer bevorzugten Ausführungsform kann noch ein oder mehrere Verdickungsmittel, auch Verdicker genannt, zugesetzt werden. Hier sind Guarkernmehl, Johannisbrotmehl, Xanthan, Cellulose, Cellulose-Derivate (Methylcellulose, Ethylcellulose, Hydroxypropylcellulose) oder Alginate geeignet, bevorzugt Guarkernmehl. Auf ein Verdickungsmittel kann prinzipiell verzichtet werden, wenn eine modifizierte Stärke als Pflanzenstärke verwendet wird. Modifizierte Stärke, auch manchmal (teilweise) vorverkleisterte Stärke genannt, wird vorzugsweise aus Maisstärke, Kartoffelstärke oder Reisstärke durch mechanische Verarbeitung in Gegenwart von Wasser mit oder ohne Anwendung von Hitze gewonnen. Dabei platzen ein Teil oder alle Stärkekörner. Anschließend wird das Pulver getrocknet. Modifizierte Stärke liegt als weißes bis gelblich weißes Pulver vor und quillt in kaltem Wasser. Zu dem Klebegemisch können ggf. noch in Lebensmitteln zugelassene Konservierungsstoffe wie Natrium-, Kalium- oder Calcium-Benzoat; Natrium-, Kalium- oder Calcium-Acetat; Natrium-, Calcium- oder Kalium-Propionat; Calciumsorbat oder Kaliumsorbat, wobei Kaliumsorbat besonders bevorzugt ist, zugegeben werden. Zu dem Klebegemisch können außerdem noch Gewürze (z.B. Salz, Pfeffer oder Zucker), Aromastoffe, Tee oder Farbstoffe hinzugefügt werden. In einer bevorzugten Ausführungsform enthält das Klebegemisch 500 - 1800 ml Wasser, 1 - 3 g Säuerungsmittel, 3 - 8 g Konservierungsmittel, 20 - 180 g Pflanzenstärke und ggf. 10 - 40 g Verdickungsmittel. In einer ganz bevorzugten Ausführungsform enthält das Klebegemisch 1500 ml Wasser, 2,2 g (granulierte) Zitronensäure, 6,6 g Kaliumsorbat, 30 g Zucker, 11 g Salz, 75 g Maismehl und 22 g Guarkernmehl.

Im nächsten Schritt werden der gekochte Reis und das Klebegemisch miteinander vermischt. Wegen des im Klebegemisch enthaltenen Säuerungsmittels hat der entstehende homogene Teig einen sauren pH-Wert, beispielsweise 4,0 - 6,0, meist 4,8 - 5,5. Optional können in geringen Mengen weitere Bestandteile wie Gewürze, Extrakte aus Gewürzpflanzen (z.B. Zwiebeln, Knoblauch), Aromastoffe, Farbstoffe, Eier oder Milch zugefügt werden.

In größerem Mengen können Frisch- oder Trocken-Gemüse und/oder Frisch- oder Trocken-Obst, z.B in geschabter Form oder als Püree aus Obst bzw. Gemüse oder eine Mischung aus beiden, bis zu einen Anteil von 80% beigefügt werden. Der Obst- und/oder Gemüseanteil sollte vorzugsweise mit einen Verdicker (bevorzugt Guarkernmehl im Verhältnis von z.B. 300 g Apfelmuss zu 10 - 30 g, vorzugsweise 15 g, Guarkernmehl) versehen sein. Unterstützend kann erneut Pflanzenstärke, z.B. 10 - 50 g/300 g Obst- und/oder Gemüseanteil, dem Teig beigefügt werden. Der pH-Wert des Teigs sollte dabei kontrolliert werden und sollte im vorstehend genannten Bereich liegen. Falls nicht, können entsprechende Säuerungsmittel oder Basen, die dem Lebensmittel-Fachmann hinreichend bekannt sind, zugesetzt werden. Ein homogener Teig bildet sich nach ca. 10 min. Die homogene Eigenschaft kann durch Abkühlung verbessert werden. Dieser Teig wird maschinell zu Formteilen verarbeitet. Hierzu eignet sich z.B. eine Strangpresse, Stanzvorrichtung oder ein Extruder. Bevorzugt ist eine Strangpresse oder mittels Pressens des Teigs in eine Negativform. Nach dem Formen verfügen die Reisformteile über nur noch geringe Klebeeigenschaften an der Außenseite, wodurch die Formteile einfach auf einem industriellen Förderband transportiert werden können und dieses nicht verkleben.

Vor dem Ausformen des Teigs zu einem Formteil kann er optional auf eine vorbestimmte Temperatur, insbesondere auf eine Temperatur im Bereich von 4 bis 15°C herunter gekühlt, werden. Dies ermöglicht das Ausformen des Formteils in einer sehr präzisen Form. Es sind eine Vielzahl von Formen für Reisformteile zugänglich, z.B. Halbkugeln oder Vollkugeln, aber auch Ringe, Dreiecke, Vierecke, Herzen oder Kleeblätter. Die Größe bzw. Dicke kann zwischen 1 und 15 cm, bevorzugt 2-6 cm, liegen.

Erfindungsgemäß wird das Formteil anschließend thermisch behandelt, um Stärkebestandteile in der Mischung zu verkleistern. Dies sorgt dafür, dass ein Rohling entsteht. Die Konsistenz entsteht durch die Verkleisterung der Stärke, welche zu einer Verbindung und Netzbildung benachbarter Teilchen führt.

Vorteilhafterweise erfolgt das thermische Behandeln mittels Frittierens oder mittels eines Heißdampfverfahrens, insbesondere mittels eines Dampfgarers, Kombidämpfers oder Spiralkochers. Das Frittieren hat den besonderen Vorteil, dass sich auf einer Außenseite des Formteils eine Deckschicht in Form einer Kruste bildet. Die Krustenbildung kann durch eine vorherige Panierung verbessert werden. Die Panierung begrenzt oder verhindert auch einen Wasserverlust aus der Masse. Da ferner kein Wasser hinzugeführt wird, bleibt somit der Wassergehalt in der Masse des Formteils konstant kann bzw. verringert sich nur leicht. Je nach Gewicht und Stärke des Formteils erfolgt das Frittieren bevorzugt bei einer Temperatur im Bereich von 160 bis 185°C, insbesondere im Bereich von 170 bis 180°C, für eine Zeitspanne im Bereich von 1,5 bis 6 min, insbesondere 2,5 bis 5 min. Dies ist ausreichend, um im Formteil für eine ausreichend lange Zeit eine Kerntemperatur von mindestens 80°C, bevorzugt 80-90°C, ganz bevorzugt 82-85°C, zu erreichen.

Ein Dampfgarer, Kombidämpfer, Spiralkocher oder auch Heißluftdämpfer vereinigt die Funktionen eines Dämpfers, in dem Gargut in gesättigter Dampfatmosphäre gegart wird, und eines Heißluftofens, bei dem das Garen mit Umluft erfolgt. Da bei den Geräten Temperatur und Feuchte über einen weiten Bereich veränderbar sind, erlauben sie eine volle Steuerung beziehungsweise Regelung des Garklimas in einem weiten Bereich. Außerdem kann aufgrund der verhältnismäßig hohen Umluftgeschwindigkeit des Lüfters und der Kondensation des Dampfes auf dem Gargut eine vergleichsweise kurze Gardauer und somit schonende Zubereitung der Lebensmittel erzielt werden. Aufgrund des Dampfgehalts bei der Verwendung eines Dampfgarers oder Spiralkochers im erfindungsgemäßen Verfahren kann eine zusätzliche Sättigung oder eine geringe Abnahme des Wassergehaltes im Formteil gesteuert werden. Um auch eine Wasseraufnahme möglichst zu vermeiden, wird die Garzeit möglichst kurz gehalten und die Luftfeuchtigkeit zwischen 55% und 100% eingestellt. Es zeigte sich, dass eine Dämpfungsdauer in einem Temperaturbereich von 100° bis 160°, insbesondere von 120° bis 140°, für 5 bis 10 Minuten ausreichend ist, um eine Kerntemperatur im Formteil von mindestens 80°C, bevorzugt 80-90°C, ganz bevorzugt ca. 82-85°C, zu gewährleisten. In einer bevorzugten Ausführungsform wird das Reisformteil im Dampfgarer für 9 Min. bei 140°C und 60% Luftfeuchtigkeit behandelt und eine Kerntemperatur oberhalb von 80°C (ca. 83°C) erreicht.

Durch den zugeführten Wasserdampf bleibt die Austrocknung und Erhärtung des Formteil-Rohlings aus. Ein Wasserverlust mit resultierender Verfestigung wird bei dieser Ausführungsform im Zuge eines anschließenden Auskühlvorganges (Gewichtsverlust ca. 2% bis 8%) erreicht.

Der nachfolgende Auskühlvorgang auf Raumtemperatur oder maximal 35°C kann durch Abwarten oder Einsatz einer Kühlvorrichtung (z.B. Kühlschrank, Eisschrank) erfolgen. Danach wird der Formteil-Rohling verpackt. Mit besonderem Vorteil wird der Rohling, insbesondere durch Kühlung, Tiefkühlung, Einschweißen (mit/ohne Schutzgas) oder Vakuumierung haltbargemacht und zwischengelagert. Falls keinerlei Konservierungsmittel (bevorzugt Kaliumsorbat) zugesetzt wurde, ist Tiefkühlen die am besten für einige Monate geeignete Aufbewahrungsform.

Vorteilhafterweise weist das erfindungsgemäß hergestellte Formteil eine erhöhte Haltbarkeit auf. Besonders gute Ergebnisse wurden erzielt, wenn geringe Mengen an Kaliumsorbat als Konservierungsmittel verwendet wurde. Das verkleisterte Formteil bindet freies Wasser und erhöht in dieser neuen Struktur die Wirkung von Kaliumsorbat. So wurde durch Experimente bestätigt, dass bei Verpackung des Formteils ohne Sauerstoffausschluss keine Tiefkühlung notwendig ist, um eine Haltbarkeit von 3 und sogar 6 Monaten sicherstellen zu können. Vielmehr genügt eine normale Kühlung. Dies liegt zum einen an dem in geringer Menge vorhandenen Kaliumsorbat und dem im Formteil vorherrschenden leicht sauren pH (ca. 4,5-5,5). Das erfindungsgemäß hergestellte Formteil ist somit durch das Herstellungsverfahren derart konserviert, dass keine chemische oder andere Konservierung erforderlich ist. Ferner werden an den Transport keine erhöhten Anforderungen gestellt, wie beispielsweise das lückenlose Einhalten einer (Tief)-Kühlkette.

Vor dem Verzehr ist eine Aufwärmung des Formteil-Rohlings angeraten bzw. notwendig. Diese erfolgt bevorzugt in einem weiteren Verfahrensschritt, dem der Rohling mittels Wärmeeinwirkung, insbesondere durch Kochen, Mikrowelle, Dämpfen, Braten, Frittieren, Backen oder im heißen Wasserbad bzw. Sous Vide, unterzogen wird. Für das erfindungsgemäß hergestellte Reisformteil ist dabei insbesondere die Eigenschaften der Kochstabilität hervorzuheben, d. h. bei 90° Wassertemperatur hält sich das Produkt ca. 40 Minuten formstabil. Beim Dampfgaren hält sich das Produkt mind. 2 Stunden formstabil. Beim Frittieren und Braten bleibt das Produkt ebenfalls formstabil.

Die Erfindung wird anhand der Figuren weiter erläutert:

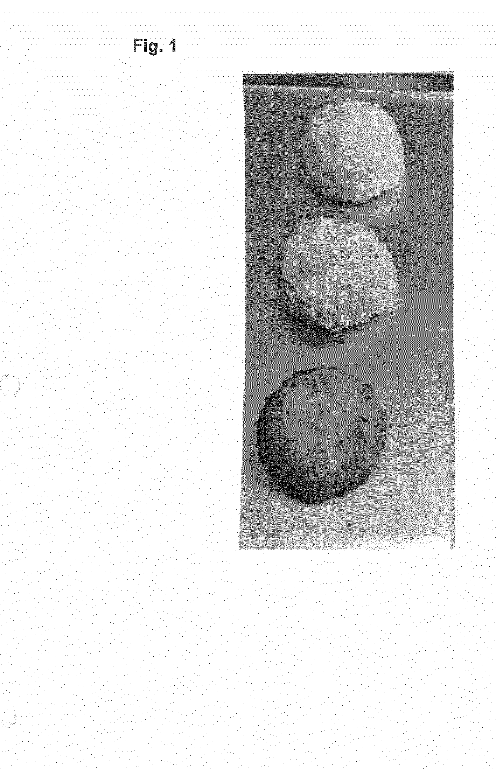

- Fig. 1: Reisformteil in Halbkugelform (von oben nach unten: Basmati-Reis geformt; Basmati-Reis paniert; Basmati-Reis frittiert)

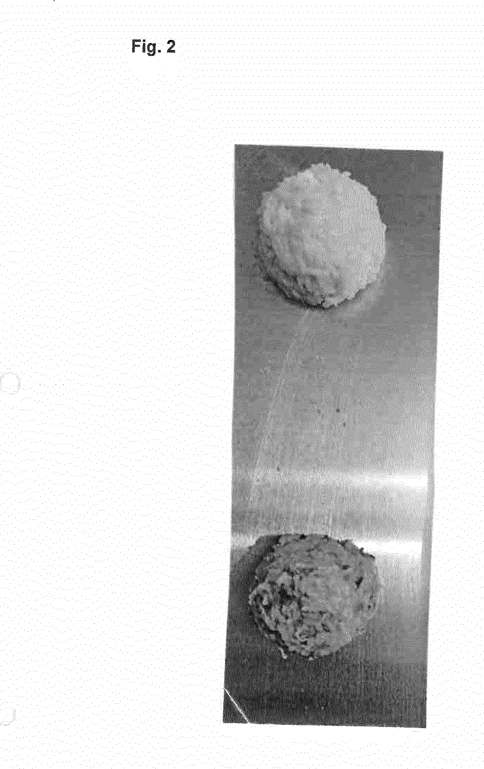

- Fig. 2: Reisformteil in Halbkugelform mit Apfelzusatz (oben: Basmati-Reis geformt; unten: Basmatireis mit geschabtem Apfel 50%:50%)

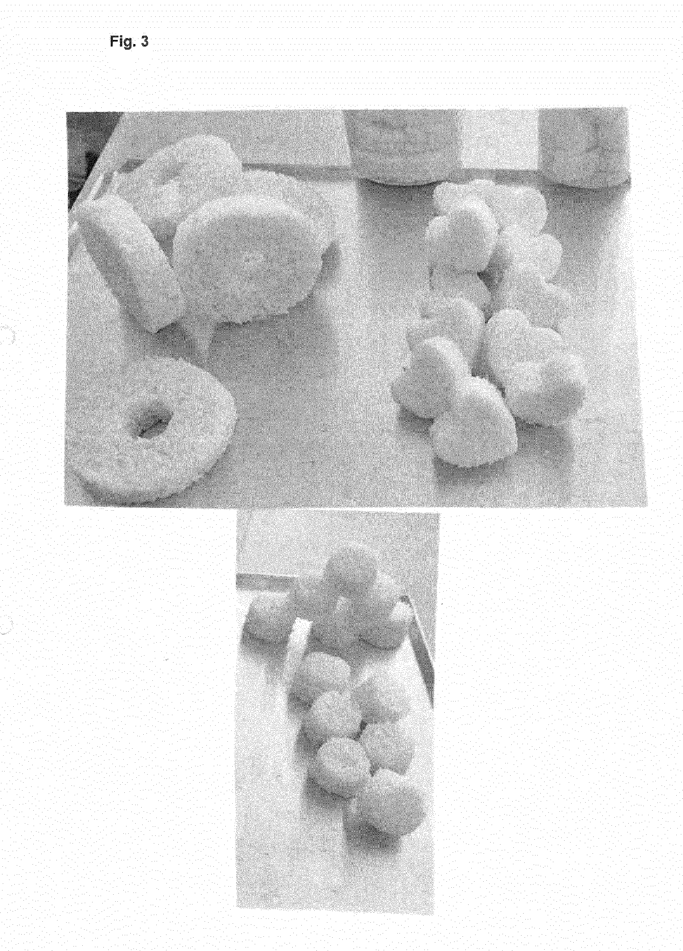

- Fig. 3: Reisformteile in verschiedenen Formen

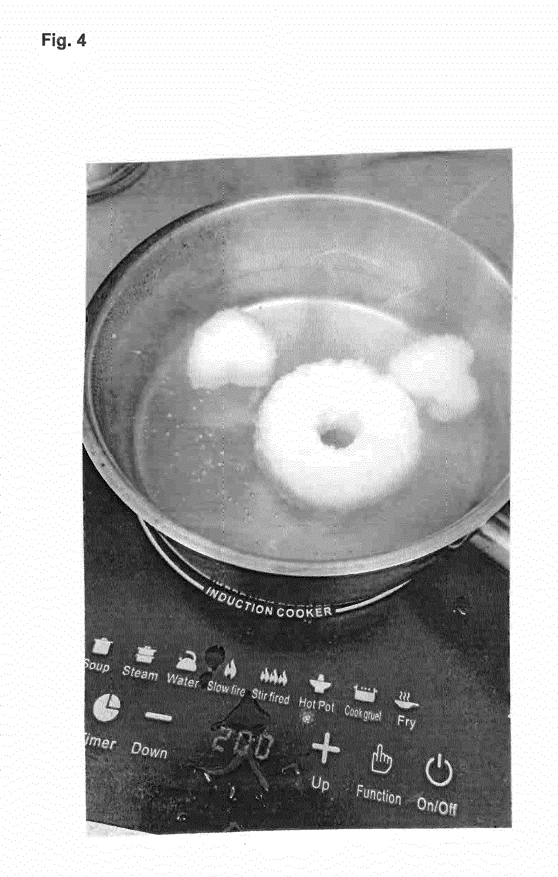

- Fig. 4: Zubereiten der Reisformteile in kochendem Wasser für 40 Minuten (-> Erhalt der Formstabilität)

Die beschriebenen Ausführungsformen sind, soweit im Einzelfall nicht explizit genannt, mit Vorteil miteinander kombinierbar.

Im Folgenden wird die Erfindung anhand von Beispielen näher beschrieben, die aber nur als Erläuterung, aber nicht einschränkend, anzusehen sind.

### Beispiel 1: Reisformteil in Form einer Halbkugel mit ca. 4 cm Durchmesser

1 kg gewaschener Reis (Basmati) wird mit 1000 ml Wasser in einen Reiskocher gegart. Die normale empfohlene Wassermenge im Garvorgang wird somit um ca. 30 % reduziert.

### Stärke-basiertes Klebegemisch

1500 ml Wasser
2,2 g granulierte Zitronensäure
6,6 g Kaliumsorbat
30 g Zucker
11 g Salz
75 g Maismehl
22 g Guarkernmehl

Das stärkebasierte Klebegemisch wird mit dem gekochten Reis (ca. 1,8 kg) vermischt. Der pH-Wert liegt bei 4,8.

Es entsteht ein sehr homogener maschinenfähiger Teig, der durch eine Strangpresse zu Reisformteilen geformt wird und nach dem Formen über nur noch sehr geringe Klebereigenschaften der Außenhaut verfügt. Somit ergibt sich der Vorteil, dass diese Reisformteile nicht auf einem industriellen Förderband kleben bleiben.

Es wurden Halbkugeln mit einen Durchmesser von 4 cm geformt.

Das Reisformteil wird nun in einen Dampfgarer für 9 min bei 140° und 60 % Luftfeuchtigkeit gegeben, um die Erreichung der Kerntemperatur von über 80° zu gewährleisten.

Nach einen beschleunigten oder natürlichen Kühlvorgang (Redrogradation) ist das Produkt nach wenigen Minuten und einer Maximaltemperatur von 30°C verpackungsfähig.

### Beispiel 2: Reisformteil in Form eines Rings mit ca. 8 cm Durchmesser

1 kg gewaschener Risotto-Reis (Carnaroli) wird mit einer Mischung aus 500 ml Milch mit 500 ml Kokosmilch in einen Reiskocher gegart. Die normale empfohlene Flüssigkeitsmenge im Garvorgang wird somit um ca. 30 % reduziert.

### Stärke-basiertes Klebegemisch

1500 ml Wasser
2,2 g granulierte Zitronensäure
6,6 g Kaliumsorbat
30 g Zucker
11 g Salz
75 g Maismehl
22 g Guarkernmehl

Das stärkebasierte Klebegemisch wird mit dem gekochten Reis (ca. 1,8 kg) vermischt. Der pH-Wert liegt bei 4,8.

Es entsteht ein sehr homogener maschinenfähiger Teig, der durch eine Strangpresse zu Reisformteilen geformt wird und nach dem Formen über nur noch sehr geringe Klebereigenschaften der Außenhaut verfügt. Somit ergibt sich der Vorteil, dass diese Reisformteile nicht auf einem industriellen Förderband kleben bleiben.

Es wurden Ringe mit einen Durchmesser von 8 cm geformt.

Das Reisformteil wird nun in einen Dampfgarer für 9 min bei 140° und 60 % Luftfeuchtigkeit gegeben, um die Erreichung der Kerntemperatur von über 80° zu gewährleisten.

Nach einen beschleunigten oder natürlichen Kühlvorgang (Retrogradation) ist das Produkt nach wenigen Minuten und einer Maximaltemperatur von 30°C verpackungsfähig.

## Patentansprüche

1. Verfahren zur Herstellung von Reisformteilen, aufweisend die folgenden Schritte:
(a) Kochen von Reis
(b) Herstellen eines stärkebasierten Klebegemischs enthaltend Wasser, ein Säuerungsmittel, eine Pflanzenstärke, ggf. ein Konservierungsmittel und ggf. ein Verdickungsmittel,
(c) Vermischen des gekochten Reis mit dem Klebegemisch unter Erhalt eines homogenen Teigs,
(d) Formen von Formteilen aus dem in Schritt (c) erhaltenden Teig und ggf. panieren,
(e) Erhitzen des in Schritt (d) erhaltenen Formteils bis sich eine Kerntemperatur von mindestens 80°C eingestellt hat,
(f) Abkühlen des Formteils auf Raumtemperatur und nachfolgende Verpackung.

2. Verfahren nach Anspruch 1, wobei der Reis Langkornreis, Rundkornreis oder Wildreis ist.

3. Verfahren nach Anspruch 1 oder 2, wobei das Konservierungsmittel Kaliumsorbat und die Pflanzenstärke Maisstärke ist.

4. Verfahren nach Anspruch 1 oder 2, wobei das stärkebasierte Klebegemisch 500 - 1800 ml Wasser, 1 - 3 g Säuerungsmittel, 3 - 8 g Konservierungsmittel, 20 - 180 g Pflanzenstärke und ggf. 10 - 40 g Verdickungsmittel enthält.

5. Verfahren nach einem der Ansprüche 1 bis 4, wobei das stärkebasierte Klebegemisch 500 - 1800 ml Wasser, 1 - 3 g Zitronensäure, 3 - 8 g Kaliumsorbat, 20 - 180 g Maismehl und ggf. 10 - 40 g Guarkernmehl sowie ggf. Gewürze und Aromen enthält.

6. Verfahren nach einem der Ansprüche 1 bis 5, wobei das Klebegemisch 1500 ml Wasser, 2,2 g granulierte Zitronensäure, 6,6 g Kaliumsorbat, 30 g Zucker, 11 g Salz, 75 g Maismehl und 22 g Guarkernmehl enthält.

7. Verfahren nach einem der Ansprüche 1 bis 6, wobei das Formen des Formteils mittels einer Strangpresse erfolgt.

8. Verfahren nach einem der Ansprüche 1 bis 7, wobei die Kerntemperatur in Schritt (e) 82-85°C ist.

9. Verfahren nach einem der Ansprüche 1 bis 8, wobei der Teig in Schritt (d) einen pH-Wert von 4,0 - 6,0 hat.

10. Verfahren nach einem der Ansprüche 1 bis 9, wobei dem Teig aus Schritt (c) Gewürze, Aromastoffe, Milch, Eier, Obst und/oder Gemüse zugesetzt wird.

11. Reisformteil herstellbar nach dem Verfahren nach einem der Ansprüche 1 bis 10.

12. Reisformteil, das neben gekochtem Reis Pflanzenstärke enthält.

13. Reisformteil nach Anspruch 12, wobei die Pflanzenstärke Maisstärke ist.
